# EUROPEAN PATENT APPLICATION

(11) **EP 2 469 778 A1**
(43) Date of publication of application: **27.06.2012**
(21) Application number: 11195760.1
(22) Date of filing: 27.12.2011
(51) Int. Cl.: H04L 12/56

(54) **Multiple-algorithm congestion management**

(30) Priority: 23.12.2010 US 977804
(71) Applicant: Telefonaktiebolaget L M Ericsson (Publ), 164 83 Stockholm (SE)
(72) Inventor: Gordon, David, Montreal, Québec H4L 5P4 (CA); Pourzandi, Makan, Montreal, Québec H4A 2L1 (CA)
(74) Representative: HOFFMANN EITLE

(57) **Abstract**

Methods and devices performing management of traffic on a single network device using plural congestion avoidance algorithms are provided. A traffic management method (100) includes (i) separating an incoming traffic in sub-streams of traffic based on at least one characteristic (S110), (ii) managing virtual queues corresponding to the sub-streams of traffic, using congestion avoidance algorithms configured to each operate on one sub-stream of traffic to avoid congestion within a capacity allocated to the one of the at least two sub-streams of traffic (S120), and (iii) dynamically reallocating a total capacity of traffic through the single network device to the virtual queues, a capacity reallocated to a virtual queue depending on a proportion of the incoming traffic, historical or current, in a sub-streams of traffic to which the virtual queue corresponds (S130).

## Description

### TECHNICAL FIELD

The present invention generally relates to systems, software and methods and, more particularly, to mechanisms and techniques for managing multiple congestion avoidance algorithms on the same physical network device.

### BACKGROUND

Network resources including a router processing time and a link throughput are limited. Network congestion is a phenomenon occurring when a link or a node is required to handle more data than its capacity and therefore its quality of service deteriorates due to queueing delays, packet losses or the blocking of new connections. Modern networks frequently use network congestion avoidance techniques. Some terms used hereinafter are familiar to a person of skill in the art. For example, the term "traffic" designates a current throughput which includes one or more flows, the term "flow" meaning a sequence of packets having the same source and destination relative to the link or the node. Based on the duration and the volume of data, the flows may be characterized as short lived or long lived, or large and small. Capacity of the link or a set of the links is a total bandwidth available and it limits the traffic.

The negative effects of network congestion for some services are alleviated by implementing priority schemes. For example, a data packet may be assigned risk coefficients related to a port number, a destination address and a source address of the packet, the risk coefficients being synthesized in a benefit coefficient, which operates as a priority (i.e. the algorithm described in U.S. Patent No. 7797738). The network congestion may also be avoided by an explicit allocation of network resources (ports, bandwidth, etc.) to specific flows.

The network congestion may be the result of a denial-of-service (DoS) attack or a distributed denial-of-service (DDoS) attack. The DoS attack and the DDoS attack are attempts originating from one or multiple sources, to make a network resource, virtual or physical, (e.g., a router) unavailable to its intended users. Although the means to carry out, motives for, and targets of a DoS or a DDoS attack may vary, it generally consists of the concerted actions generating network congestion to prevent a device or a service from functioning efficiently or at all, for the duration of the attack notwithstanding service failure subsequent to the attack.

In preventing network congestion, various techniques are applied both (i) locally, at a node (e.g., a router), where a network congestion may occur, and (ii) at end points (source or destination). At a router, scheduling algorithms, such as, fair queueing, are commonly used mechanisms for preventing congestive collapses. Random early detection (RED) algorithms (including e.g., weighted RED) according to which packets are randomly dropped proactively triggering the end points to slow transmission before congestion collapse actually occurs, are also frequently employed. Other related algorithms used in routers are explicit congestion notification and buffer tuning. For example, tail drop or leaky bucket methods use the buffer available capacity to drop the packets

Newer congestion avoidance algorithms have become capable to deal with issues such as DDoS. However, each congestion avoidance algorithm has its particular strengths and weaknesses, which renders an algorithm effective for traffic having certain characteristics. For example, RED-PD (Preferential Dropping) is suited to operate when there are a few large flows responsible for congestion, whereas a router-based technique that mitigates reduction of quality algorithm by analyzing information on the traffic (proposed by Ansari) is ideally suited to manage a large number of short lived (small) flows. In contrast, conventionally, all the traffic on a physical network device is managed by the same congestion avoidance algorithm.

Accordingly, it would be desirable to provide devices, systems and methods to overcome at least some of the drawbacks described above.

### SUMMARY

One or more of the independent claims advantageously provides methods and devices using plural congestion avoidance algorithms. Virtualization is increasingly important for networks today. Using the claimed methods and devices, cloud service providers offer traffic management using plural congestion avoidance algorithms and can take into consideration a service level of each virtualized instance. Conversely, the congestion avoidance algorithms are increasingly specialized in view of escalating threats (e.g., sophisticated DoS or DDoS attacks), but each algorithm has strengths and weaknesses. By using plural congestion avoidance algorithms on sub-streams of traffic having specific characteristics the strengths of each algorithm are used while the weaknesses are avoided.

According to one exemplary embodiment, a traffic management method using plural congestion avoidance algorithms operating on traffic through a network device including separating an incoming traffic in at least two sub-streams of traffic based on at least one characteristic is provided. The method further includes managing virtual queues corresponding to the at least two sub-streams of traffic, using congestion avoidance algorithms configured to each operate on one of the at least two sub-streams of traffic to avoid congestion within a capacity allocated to the one of the at least two sub-streams of traffic. The method also includes dynamically reallocating a total capacity of traffic through the network device to the virtual queues, a capacity reallocated to a virtual queue depending on a proportion of the incoming traffic in a sub-stream of traffic to which the virtual queue corresponds.

According to one exemplary embodiment, a network device includes an interface configured to receive an incoming traffic, and a traffic processing unit connected to the interface. The traffic processing unit is configured (i) to separate the incoming traffic in at least two sub-streams of traffic based on at least one characteristic, (ii) to manage virtual queues corresponding to the at least two sub-streams of traffic, using at least two congestion avoidance algorithms configured to each operate on one of the at least two sub-streams of traffic to avoid congestion within a capacity allocated to the one of the at least two sub-streams of traffic, and (iii) to dynamically reallocate a total capacity of traffic through the physical network device to the virtual queues, a capacity reallocated to a virtual queue depending on a proportion of the incoming traffic in a sub-streams of traffic to which the virtual queue corresponds.

According to another exemplary embodiment, a computer readable medium storing executable codes which, when executed on a computer, make the computer to perform a traffic management method using plural congestion avoidance algorithms operating on traffic through a network device is provided. The method includes separating an incoming traffic in at least two sub-streams of traffic based on at least one characteristic. The method further includes managing virtual queues corresponding to the at least two sub-streams of traffic, using at least two congestion avoidance algorithms configured to each operate on one of the at least two sub-streams of traffic to avoid congestion within a capacity allocated to the one of the at least two sub-streams of traffic. The method also includes dynamically reallocating a total capacity of traffic through the physical network device to the virtual queues, a capacity reallocated to a virtual queue depending on a proportion of the incoming traffic in a sub-streams of traffic to which the virtual queue corresponds.

### BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a flow diagram of a traffic management method according to an exemplary embodiment;

Figure 2 is a diagram illustrating multi-tier operation according to an exemplary embodiment;

Figure 3 illustrates phases of congestion management using multiple algorithms according to an exemplary embodiment;

Figure 4 is a schematic diagram of a network device according to an exemplary embodiment; and

Figure 5 is a schematic diagram of a network device configured to perform a method of avoiding traffic congestion using plural congestion avoidance algorithms.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology related to congestion avoidance algorithms operating on physical network devices, such as, routers. However, the embodiments to be discussed next are not limited to these systems, but may be applied to other instances of data processing requiring multiple data flows being transferred via the same physical structure with limited capacity.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification is not necessarily all referring to the same embodiment. Further, the particular features, structures or characteristics may be combined in any suitable manner in one or more embodiments.

The algorithm specialization is made possible and attractive using multiple congestion avoidance algorithms on the same physical network device.

Cloud virtualization involves the virtualization of resources, such as, ports, bandwidth and routers. In other words, in cloud virtualization, each flow may be viewed as being handled by a different virtual instance of the router. Conventionally, one congestion avoidance mechanism (i.e., algorithm) is applied indiscriminately for all the traffic running on the physical network device (i.e. router), without discriminating for the multiple virtualized instances corresponding to each flow. However, flow characteristics may differ being constrained by service agreements specifying certain bandwidth limits for a customer. When a conventional congestion avoidance algorithm is used and it is not possible to differentiate among the flows in the traffic, more packets of all flows will be dropped as congestion increases. Therefore, a few heavy-usage customers may cause dropping of packets belonging to customers operating well within the limits of their service agreements and using very little bandwidth. There is no practical way of distinguishing among the flows contributing to the congestion which are legitimate flows from customers entitled to service and which are ill-intentioned flows attacking the router.

According to an exemplary embodiment, each virtualized instance of a physical structure runs its own congestion avoidance algorithm. Thus, multiple congestion avoidance algorithms related to the same underlying physical structure (e.g., a router) run on flows separated based on ownership. Moreover, the resources (i.e., bandwidth, buffers) allocated to each virtual instance may differ based on service agreements and/or traffic history.

Other exemplary embodiments use different congestion avoidance algorithms for different type of traffic to exploit particular strengths of the congestion avoidance algorithms in managing the overall performance. For example, the RED-PD is efficient in managing a small number of large flows, and the router-based technique that mitigates reduction of quality by analyzing information on the traffic is ideally suited to manage a large number of short lived flows.

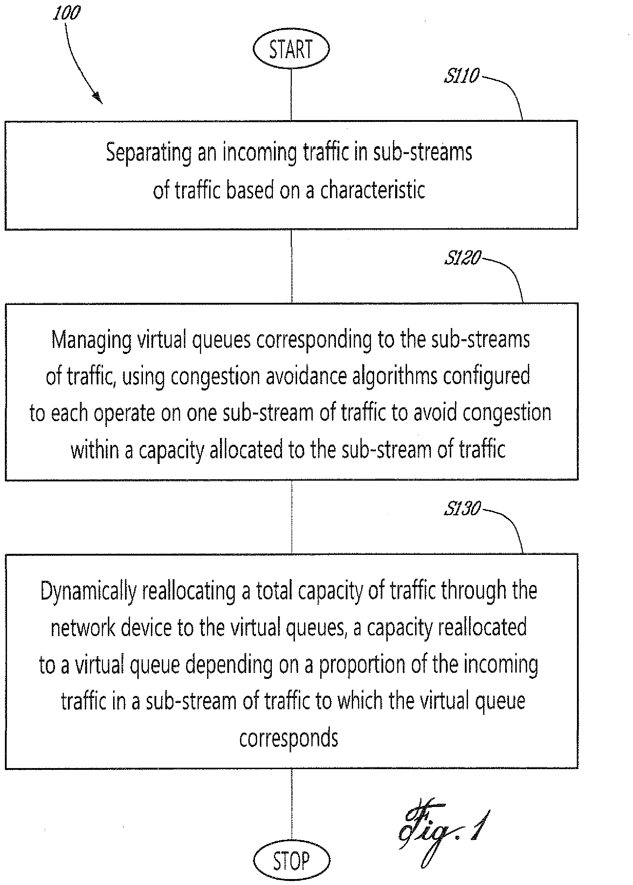

According to an exemplary embodiment illustrated in Figure 1, a traffic management method 100 includes separating an incoming traffic in sub-streams of traffic based on a characteristic at S110. The method 100 further includes managing virtual queues corresponding to the sub-streams of traffic, using congestion avoidance algorithms configured to each operate on one sub-stream of traffic in order to avoid congestion within a capacity allocated to the one sub-stream of traffic, at S120. Further, the method 100 also includes, at S130, dynamically reallocating a total capacity of traffic through the network device to the virtual queues, a capacity reallocated to a virtual queue depending on a proportion of the incoming traffic in a sub stream of traffic to which the virtual queue corresponds. The proportion of the incoming traffic may be evaluated at regular time intervals or upon any occurrence of a trigger event. The capacity allocated may consist of a part of the used bandwidth and a part of the unused bandwidth. For example, a trigger event may be when a current proportion of one of the sub-streams of traffic from the total incoming traffic differs from the historical or moving average proportion used in previously allocating the capacity with more than a predetermined amount (e.g., 5%). Additionally, unused bandwidth may be reallocated to virtual queues based on usage patterns, for example, favoring well behaved queues.

Thus, at S110, the traffic is segmented into sub-streams, and a virtual queue is associated to each sub-stream of traffic, the virtual queue being managed using a congestion avoidance algorithm. Note that the terms "separating", "segmenting" or "dividing" the traffic are used in alternative relative to the same operation. In the scenario of cloud virtualization, this traffic segmentation may be performed based on ownership, each virtual queue being associated to a flow.

In the scenario of different specialized algorithms, the traffic segmentation may be done based on a characteristic to create sub-streams on which to operate specialized algorithms best suited for each sub-stream in view of the respective strengths of each of the congestion avoidance algorithms. The specialized algorithms are expected to be complementary. For example, if one of the algorithms is best suited for avoiding congestion for few larger flows, then another algorithm used in parallel is best suited to handle a large number of small flows. Another example is that if an algorithm that is proficient with large packets is used to manage one virtual queue, than another algorithm that is proficient with smaller packets is used to manage another virtual queue. This complementarity is not exclusive and may be used in a nested fashion based on the traffic characteristics and algorithm specialization, for instance where large flows may be handled first and then small flows may be handled, according to other characteristics, such as, large and small packets.

According to a feature of several embodiments, first, a characteristic that separates the two or more algorithms may be selected from a plurality of characteristics useable to segment the traffic. For example, the characteristic may be duration of flows, size of packets, ownership, etc. After the characteristic is determined, the traffic is segmented using a classification mechanism in at least two sub-streams based on the characteristic. The characteristics useable for segmenting the traffic may have associated priorities. Different characteristics may be used in a sequence, an earlier used characteristic having a higher priority than a later used characteristic.

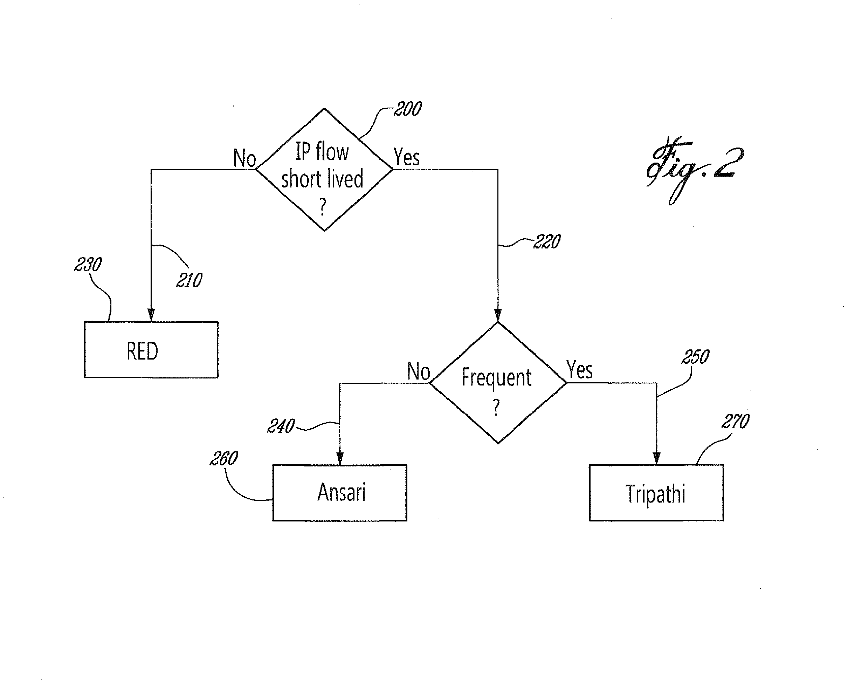

Each of the at least two sub-streams is associated with a virtual queue managed using a different congestion avoidance algorithm. Even if in cloud visualization, when the traffic is segmented based on ownership, and the congestion algorithms used for the at least two sub-streams (i.e., flows) may be the same, the capacity (e.g., bandwidth, buffers) allocated to the different virtual queues are likely different, depending on the individual characteristics of the sub-streams and applicable service agreements. Thus, in some embodiments, the traffic segmentation may be multi-tier as illustrated in Figure 2. An incoming traffic 200 may be first segmented into a first sub-stream 210 and a second sub-stream 220, based on whether a flow is short lived or long lived. A second segmentation of the second sub-stream 220 may be further performed based on a frequency of packets in the small flows, to yield a third sub-stream 240 including short lived flows without frequent packages, and a fourth sub-stream 250 including short lived flows with frequent packages.

The characteristic used to split the traffic may indicate the congestion avoidance algorithms suitable for managing the virtual queues associated with the resulting sub-streams. For example, the traffic may be segmented into (i) a sub-stream including a small number of large flows for which the RED-PD algorithm is used, and (ii) a sub-stream including a large number of small flows for which the router-based technique that mitigates reduction of quality algorithm by analyzing information on the traffic (proposed by Ansari) is used.

In another example, related to Figure 2, a RED algorithm using an average queue size is best suited to perform congestion avoidance for the first sub-stream 210 including the long lived flows at 230. Two algorithms, Ansari and Tripathi may be used to avoid congestion for the second sub-stream 220 including short lived flows. In Tripathi, the incoming packets are randomly chosen and compared to the packets in the router queue. If the two packets are from the same flow, the flow tables are updated and based on the statistics of the flow table it is defined if the flow is part of DDoS attack or not. The Tripathi algorithm is better suited for avoiding congestion in traffic including short lived flows and frequent packets. After the second segmentation, the Ansari algorithm may be used to avoid congestions related to the third sub-stream 240, at 260, and the Tripathi algorithm may be used to avoid congestions related to the fourth sub-stream 250, at 270.

Thus, in view of Figure 2, method 100 may be a multi-tier method, including also the following operations: separating one sub-streams of traffic in secondary sub-streams of traffic based on a secondary characteristic, managing virtual queues corresponding to the secondary sub-streams of traffic, using secondary congestion avoidance algorithms configured to operate on the secondary sub-streams of traffic to avoid congestion within a capacity allocated to each of the secondary sub-streams of traffic.

Also, in some embodiments, the method 100 may include analyzing the incoming traffic to select a first characteristic based on which to separate an incoming traffic from a plurality of useable characteristics. A secondary characteristic may also be selected from the useable characteristics based on analyzing a sub-stream to be split using the secondary characteristic. The characteristics may have associated priorities, the first characteristics having a higher priority than the second characteristic.

Another feature of several embodiments, is the dynamically reallocating of the total capacity of traffic through the physical network device to the virtual queues. A congestion avoidance algorithm manages a virtual queue within an assigned capacity. The total capacity is a fixed value, but the proportion of traffic in the different sub-streams may vary. For example, for a link of 10G, two separate congestion avoidance algorithms may at one point in time, manage each 50% of the traffic. Each of the two congestion avoidance algorithms acts independently, within the assigned capacity. Proportionally, each algorithm would 'own' 5G of the link. However, if at a later point in time, the proportion of the incoming traffic in a sub-streams of traffic to which the virtual queue corresponds changes (e.g., due to a DDoS attack) so that a proportion of the traffic managed by a first congestion avoidance algorithm versus a proportion of the traffic managed by a second congestion avoidance algorithm becomes 80% versus 20%, subsequently, the first congestion algorithm would be assigned to manage 8G and the second congestion avoidance algorithm would be assigned to manage 2G of the total capacity. Thus, the total capacity may be allocated dynamically to virtual queues managed using the congestion avoidance algorithms, depending on a respective proportion of the incoming traffic in a sub-stream.

Another feature of several embodiments is allocating an unused capacity dynamically depending not only on a proportion of the current traffic represented by a sub-stream managed from congestion avoidance point of view using a certain algorithm, but also depending on a historic evolution of a volume of the sub-stream. For each congestion avoidance algorithms, a remaining (unused, available) bandwidth is a proxy for a level of congestion. In a non-limiting illustration of this concept, consider that a traffic is segmented in two sub-streams based on a characteristic, and that the ratio between the resulting two traffic sub-streams changes from 20-80 to 10-90 and finally to 1-99. if a volume of the first traffic sub-stream has remained constant at 100Mbps throughout this change in proportion, if capacity (bandwidth) is split proportionally, packets from the first traffic sub-stream will start being dropped due to the increase of the second traffic sub-stream (abusing the bandwidth). Thus, it is desirable that an unused capacity be allocated depending not only on a current traffic, but also on a historic evolution of the traffic managed by different congestion algorithms. For example a 'fudge factor' proportional to the change of used bandwidth of a particular segment may be used to achieve fairness in this instance. In other words, to the extent that the entire capacity is required to satisfy traffic for different sub-streams, a capacity of a traffic sub-stream may be maintained until a decrease or increase of the traffic for the sub-stream occurs. The capacity may be maintained at a previously allocated value or may be maintained to a level that would allow the constant volume to continue to be transmitted without congestion.

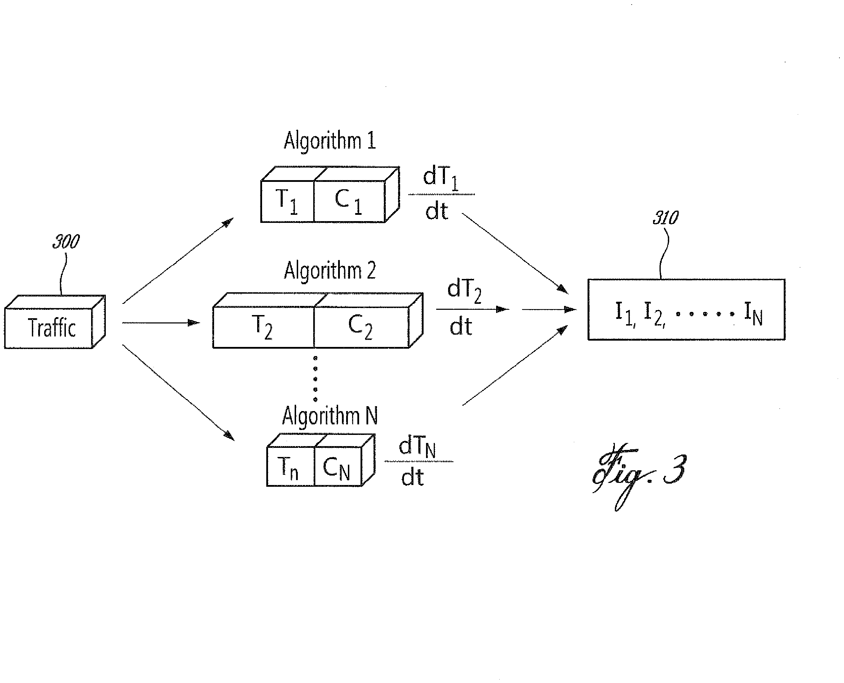

In view of the above examples and discussion, congestion management involving multiple algorithms employs (i) a classification based on a common characteristic of the congestion avoidance algorithms used, (ii) management of unused (or total) capacity (bandwidth), and (iii) management of information related to each algorithm enabling a dynamic distribution of resources (e.g., unused capacity, useable congestion avoidance algorithms and their associated priorities, etc.). These aspects are illustrated schematically in Figure 3, in which traffic 300 is segmented in a plurality of sub-streams of traffic T1, T2, ..., TN, based on one or more characteristics such as flow duration, ownership, packets size, etc. Each of the sub-streams T1, T2, ..., TN is managed from a congestion avoidance point of view, by a congestion avoidance algorithm (i.e., "Algorithm 1", "Algorithm 2", ..., "Algorithm N"). An unused capacity (e.g., bandwidth) is divided in portions assigned to each of the sub-streams C1, C2, ..., CN, a portion thereof depending on a current traffic of the sub-stream (T1, T2, ..., TN) and a change in the traffic of the sub-stream (dT1/dt, dT2/dt, ..., dTN/dt). Further, information 310 about each of the algorithms, the sub-streams and the assigned capacity (I1, I2, ..., IN) is gathered and managed dynamically to update the manner of executing the traffic segmentation and congestion avoidance using different algorithms in response to changes occurring in the nature and volume of the traffic.

Note that allocating an unused capacity or a total capacity is fundamentally the same operation, the first being more suitable assuming that the underlying physical device is not congested. The allocating of the unused capacity provides a mechanism of avoiding congestion in particular the congestions due to DoS or DDoS attacks.

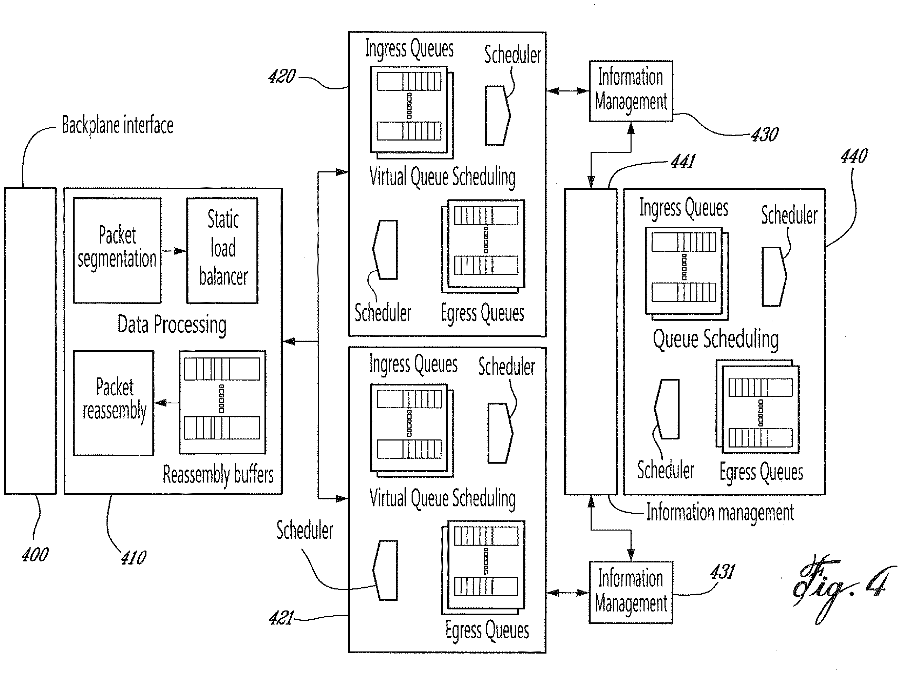

From a cloud virtualization point of view, each sub-stream of traffic Ti, algorithm and managed capacity may be associated with a virtual queue scheduling module. Figure 4 is a schematic diagram of a network device with blocks that may be hardware, software or a combination thereof. Thus, from a backplane interface 400, a data processing block 410 receives the incoming traffic. The incoming traffic is segmented in the data processing block 410 in at least two sub-streams based on a (at least one) characteristic. Each of the sub-streams is directed to one virtual queue scheduling block 420 and 421. in a virtual queue scheduling block 420 or 421, management of a received sub-stream of traffic from the point of view of congestion avoidance is performed using an algorithm and within an assigned capacity. The information related to operation in the virtual queue scheduling block 420 or 421 (e.g., performance and fluctuations) is collected by respective information managed modules 430 and 431 that feed the information to an information management module 441 of a real queue scheduling module 440 corresponding to the underlying physical structure (e.g., a router). In other words, for a physical structure, plural virtual queues scheduling modules and one real queue scheduling module are used to manage the traffic and avoid congestion.

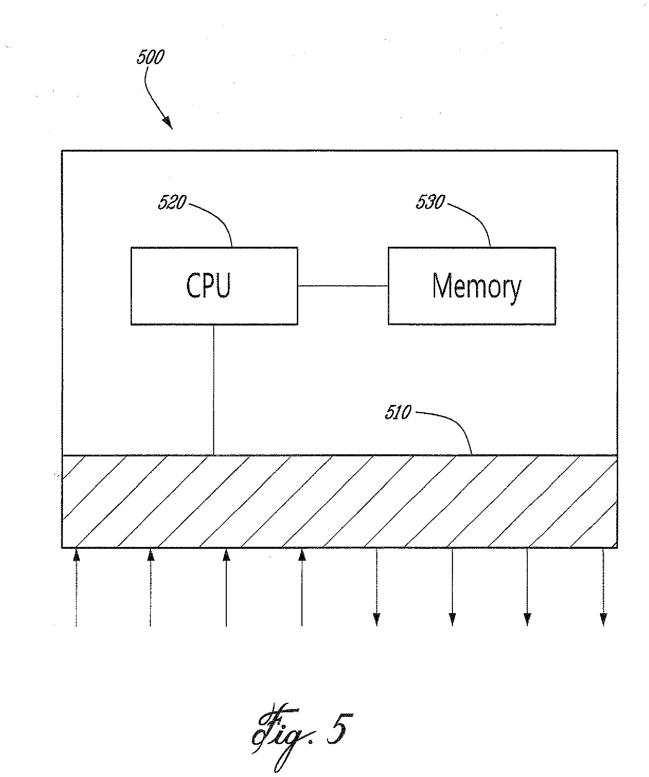

A network device 500, illustrated in Figure 5, is configured to perform a method of avoiding traffic congestion using plural congestion avoidance algorithms. The network device 500 may be a router or a security appliance attached to a router. In an alternative embodiment, the network device 500 may be a computer providing a service for traffic management using plural congestion avoidance algorithms, the actual traffic flowing through a physically distinct device.

The network device 500 includes at least one interface 510 configured to receive an incoming traffic. The interface 510 may also be configured to output an outgoing traffic, although in an alternative embodiment, a separate interface may serve to output the outgoing traffic. The interface 510 may include a plurality of incoming ports through which packets of the incoming traffic are received from one or more network devices, and a plurality of outgoing ports through which packets of the outgoing traffic are sent to one or more network devices.

The interface 510 is connected to a traffic processing unit 520 configured to perform management of the incoming traffic using at least two congestion avoidance algorithms. Thus, the data processing unit 520 is configured to segment the incoming traffic into at least two sub-streams based on at least one characteristic. Further, the data processing unit 520 is configured to manage virtual queues corresponding to the at least two secondary sub-streams of traffic, using at least two secondary congestion avoidance algorithms each of which being configured to operate on one of the at least two secondary sub-streams of traffic to avoid congestion within a capacity allocated to the one of the at least two secondary sub-streams of traffic. The data processing unit 520 may include a plurality of processors, and different processors may execute different congestion avoidance algorithms.

The data processing unit 520 is also configured to dynamically reallocate a capacity of traffic of the sub-stream of traffic that has been separated in the at least two secondary sub-streams of traffic, to the virtual queues corresponding to the at least two secondary sub-streams of traffic, a capacity reallocated to a virtual queue depending on a proportion of the sub-stream of traffic in a secondary sub-stream to which the virtual queue corresponds. The traffic processing unit 520 may be configured to dynamically reallocate the capacity at predetermined time intervals or upon any occurrence of a trigger event. The reallocation of the total capacity may be performed at predetermined time intervals or upon any occurrence of a trigger event.

In alternative embodiments, the traffic processing unit is further configured to dynamically reallocate the capacity depending also on a change of volume of the at least two sub-streams of traffic, to favor preserving an allocated capacity of a sub-stream of traffic whose volume is constant over time. For example, the capacity allocated to a virtual queue corresponding to a constant volume of traffic may be maintained or may be at least a capacity corresponding to the constant volume.

The traffic processing unit may also be configured to analyze the incoming traffic to select the at least one characteristic based on which the separating is performed, the at least one characteristic being one of a plurality of useable characteristics.

The traffic processing unit 520 may perform operations related to congestion avoidance in a multi-tier manner. Thus, the traffic processing unit may (i) separate at least one of the at least two sub-streams of traffic in at least two secondary sub-streams of traffic based on a secondary characteristic, (ii) manage virtual queues corresponding to the at least two secondary sub-streams of traffic, using at least two secondary congestion avoidance algorithms each of which being configured to operate on one of the at least two secondary sub-streams of traffic to avoid congestion within a capacity allocated to the one of the at least two secondary sub-streams of traffic, and (iii) dynamically reallocate a capacity of traffic of the sub-stream of traffic that has been separated in the at least two secondary sub-streams of traffic, to the virtual queues corresponding to the at least two secondary sub-streams of traffic, a capacity reallocate to a virtual queue depending on a proportion of the sub-stream of traffic in a secondary sub-stream to which the virtual queue corresponds. The characteristic used first to separate the traffic and the secondary characteristic may be selected from a plurality of useable characteristics having associated priorities, based on analyzing the incoming traffic and the sub-stream of traffic that is separated in the at least two secondary sub-streams of traffic, respectively. The characteristic used first to separate the traffic may have a higher associated priority than the secondary characteristic.

The characteristics useable to separate the traffic may include a size of traffic flows (e.g., a first sub-stream grouping few large flows, and a second sub-stream grouping a large number of small flows), a size of packets (e.g., a first sub-stream grouping large packets and a second sub-stream grouping small packets), and ownership of a flow.

The traffic processing unit 520 may also be configured to combine the virtual queues into a real queue and to control the interface 510 to output the real queue as an output traffic.

The traffic processing unit 520 may also be configured to manage information on the virtual queues and to reallocate the capacity based on the information on the virtual queues.

The network device 500 may also include one or more data storage devices 530, such as, hard and floppy disk drives, CD-ROM drives, and other hardware capable of reading and/or storing information such as DVD, etc. In one embodiment, executable codes for carrying out a method of managing traffic through the network device using at least two congestion avoidance algorithms (as in one of the embodiments discussed above) may be stored in the one or more data storage devices 530. The one or more data storage devices 530 may also be used to temporarily store packets of the incoming traffic.

The disclosed exemplary embodiments provide network devices, methods and a computer readable medium storing executable codes implementing a method of managing an incoming traffic using at least two congestion avoidance algorithms. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a specifically programmed computer or processor.

## Claims

1. A traffic management method (100) using plural congestion avoidance algorithms operating on traffic through a single network device, the method comprising:
separating (S110) an incoming traffic in at least two sub-streams of traffic based on at least one characteristic;
managing virtual queues (S120) corresponding to the at least two sub-streams of traffic, using congestion avoidance algorithms configured to each operate on one of the at least two sub-streams of traffic to avoid congestion within a capacity allocated to the one of the at least two sub-streams of traffic; and
dynamically reallocating (S130) a total capacity of traffic through the single network device to the virtual queues, a capacity reallocated to a virtual queue depending on a proportion of the incoming traffic in a sub-stream of traffic to which the virtual queue corresponds.

2. The method of claim 1, wherein the capacity of traffic is bandwidth.

3. The method of claim 1, wherein the dynamically reallocating occurs at predetermined time intervals or upon any occurrence of a trigger event.

4. The method of claim 1, wherein the dynamically reallocating is performed depending also on a change of volume of the at least two sub-streams of traffic, (i) to favor preserving an allocated capacity of a sub-stream of traffic whose volume is constant over time, or (ii) to allocate at least a capacity corresponding to the constant volume to the sub-stream of traffic whose volume is constant over time.

5. The method of claim 1, further comprising:
analyzing the incoming traffic to select the at least one characteristic based on which the separating is performed, the at least one characteristic being one of a plurality of useable characteristics.

6. The method of claim 1, further comprising:
separating at least one of the at least two sub-streams of traffic in at least two secondary sub-streams of traffic based on a secondary characteristic;
managing virtual queues corresponding to the at least two secondary sub-streams of traffic, using at least two secondary congestion avoidance algorithms each of which being configured to operate on one of the at least two secondary sub-streams of traffic to avoid congestion within a capacity allocated to the one of the at least two secondary sub-streams of traffic; and
dynamically reallocating a capacity of traffic of the sub-stream of traffic that has been separated in the at least two secondary sub-streams of traffic, to the virtual queues corresponding to the at least two secondary sub-streams of traffic, a capacity reallocated to a virtual queue depending on a proportion of the sub-stream of traffic in a secondary sub-stream to which the virtual queue corresponds.

7. The method of claim 6, further comprising:
selecting the at least one characteristic and the secondary characteristics from a plurality of useable characteristics having associated priorities, based on analyzing the incoming traffic and the sub-stream of traffic that is separated in the at least two secondary sub-streams of traffic, the at least one characteristic having a higher associated priority than the secondary characteristic.

8. The method of claim 1, wherein the at least two congestion avoidance algorithms are different being configured to operate on sub-streams of traffic having complementary characteristics as defined relative to the at least one characteristic.

9. The method of claim 1, wherein the at least one characteristic is
a size of traffic flows, a first of the at least two sub-streams grouping few large flows, and a second of the at least two sub-streams grouping a large number of small flows, or
a size of packets, a first of the at least two sub-streams grouping large packets and a second of the at least two sub-streams grouping small packets, or
ownership of a flow, the virtual queues including at least one virtual queue for each flow.

10. The method of claim 1, further comprising:
combining outputs of the virtual queues into a real queue; and
outputting the real queue as an output traffic.

11. The method of claim 1, further comprising:
managing information on the virtual queue, wherein the reallocating depends on the information on the virtual queues.

12. The method of claim 1, wherein the method is performed by an apparatus which is physically distinct from the network device, the method being an offered service.

13. A network device (500), comprising:
an interface (510) configured to receive an incoming traffic;
a traffic processing unit (520) connected to the interface and configured
to separate the incoming traffic in at least two sub-streams of traffic based on at least one characteristic;
to manage virtual queues corresponding to the at least two sub-streams of traffic, using at least two congestion avoidance algorithms configured to each operate on one of the at least two sub-streams of traffic to avoid congestion within a capacity allocated to the one of the at least two sub-streams of traffic; and
to dynamically reallocate a total capacity of traffic through the physical network device to the virtual queues, a capacity reallocated to a virtual queue depending on a proportion of the incoming traffic in a sub-stream of traffic to which the virtual queue corresponds.

14. The network device of claim 13, further comprising:
a memory connected to the traffic processing unit and configured to temporarily store packets of the incoming traffic.

15. The network device of claim 13, wherein the traffic processing unit is further configured to dynamically reallocate the total capacity at predetermined time intervals or upon any occurrence of a trigger event.

16. The network device of claim 13, wherein the traffic processing unit is further configured to dynamically reallocate the capacity depending also on a change of volume of the at least two sub-streams of traffic, (i) to favor preserving an allocated capacity of a sub-stream of traffic whose volume is constant over time, or (ii) to allocate at least a capacity corresponding to the constant volume to the sub-stream of traffic whose volume is constant over time.

17. The network device of claim 13, wherein the traffic processing unit is further configured to analyze the incoming traffic in order to select the at least one characteristic based on which the separating is performed, the at least one characteristic being one of a plurality of useable characteristics.

18. The network device of claim 13, wherein the traffic processing unit is further configured
to separate at least one of the at least two sub-streams of traffic in at least two secondary sub-streams of traffic based on a secondary characteristic;
to manage virtual queues corresponding to the at least two secondary sub-streams of traffic, using at least two secondary congestion avoidance algorithms each of which being configured to operate on one of the at least two secondary sub-streams of traffic to avoid congestion within a capacity allocated to the one of the at least two secondary sub-streams of traffic; and
to dynamically reallocate a capacity of traffic of the sub-stream of traffic that has been separated in the at least two secondary sub-streams of traffic, to the virtual queues corresponding to the at least two secondary sub-streams of traffic, a capacity reallocated to a virtual queue depending on a proportion of the sub-stream of traffic in a secondary sub-stream to which the virtual queue corresponds.

19. The network device of claim 13, wherein the at least two congestion avoidance algorithms are different being configured to operate on sub-streams of traffic having complementary characteristics as defined relative to the at least one characteristic.

20. The network device of claim 13, wherein the at least one characteristic is
a size of traffic flows, a first of the at least two sub-streams grouping few large flows, and a second of the at least two sub-streams grouping a large number of small flows, or
a size of packets, a first of the at least two sub-streams grouping large packets and a second of the at least two sub-streams grouping small packets, or
ownership of a flow, the virtual queues including at least one virtual queue for each flow.

21. The network device of claim 13, wherein the traffic processing unit is further configured
to combine the virtual queues into a real queue; and
to control the interface to output the real queue as an output traffic.

22. The network device of claim 13, wherein the traffic processing unit is further configured:
to manage information on the virtual queues, and
to reallocated the capacity based on the information on the virtual queues.

23. The network device of claim 13, wherein the network device is a router.

24. The network device of claim 13, wherein the network device is a security appliance attached to a router.

25. A computer readable medium (530) storing executable codes which when executed on a computer make the computer to perform a traffic management method (100) using plural congestion avoidance algorithms operating on traffic through a network device, the method comprising:
separating (S110) an incoming traffic in at least two sub-streams of traffic based on at least one characteristic;
managing virtual queues (S120) corresponding to the at least two sub-streams of traffic, using at least two congestion avoidance algorithms configured to each operate on one of the at least two sub-streams of traffic to avoid congestion within a capacity allocated to the one of the at least two sub-streams of traffic; and
dynamically reallocating (S130) a total capacity of traffic through the physical network device to the virtual queues, a capacity reallocated to a virtual queue depending on a proportion of the incoming traffic in a sub-streams of traffic to which the virtual queue corresponds.
